# EUROPEAN PATENT APPLICATION

(11) **EP 2 040 498 A1**
(43) Date of publication of application: **25.03.2009**
(21) Application number: 08014467.8
(22) Date of filing: 13.08.2008
(51) Int. Cl.: H04W 28/06, H04W 80/02

(54) **Method for setting headers for RLC PDU segments**

(30) Priority: 15.08.2007 US 955871 P
(71) Applicant: Innovative Sonic Limited, Tortola (VG)
(72) Inventor: Jiang, Sam Shiaw-Shiang, Peitou Taipei City (TW)
(74) Representative: Hager, Thomas Johannes

(57) **Abstract**

A method for setting headers in a transmitter of a wireless communications system includes dividing a Radio Link Control Protocol Data Unit into a plurality of segments each including a header (402), and setting the header to include a field indicating a sequence number of the Radio Link Control Protocol Data Unit (404).

## Description

This application claims the benefit of U.S. Provisional Application No. 60/955,871, filed on Aug 15, 2007 and entitled "Optimized Segment Offset for RLC PDU segment."

The present invention relates to a method and apparatus for setting headers in a wireless communications system according to the pre-characterizing clauses of claims 1 and 5.

The third generation mobile telecommunications system (called 3G system) provides high frequency spectrum utilization, universal coverage, and high quality, high-speed multimedia data transmission, and also meets all kinds of QoS requirements simultaneously, providing diverse, flexible, two-way transmission services and better communication quality to reduce transmission interruption rates. However, due to demand for high-speed and multimedia applications, the next generation mobile telecommunications technology and related communication protocols have been developed.

Long Term Evolution wireless communications system (LTE system), an advanced high-speed wireless communications system established upon the 3G mobile telecommunications system, supports only packet-switched transmission, and tends to implement both Medium Access Control (MAC) layer and Radio Link Control (RLC) layer in one single communication site, such as in Node B alone rather than in Node B and RNC (Radio Network Controller) respectively, so that the system structure becomes simple.

In the prior art, the LTE system can support segmenting or re-segmenting of an RLC PDU (Protocol Data Unit) due to radio condition change. A segmented RLC PDU is called an RLC PDU segment or simply a segment, while the original un-segmented RLC PDU is called RLC PDU, hereinafter.

In order to indicate a position of a segment within the original RLC PDU, a related prior art uses a Segment Offset (SO) field, to indicate the position of the segment in bytes within the original RLC PDU. However, the length of the SO field is not decided. Besides, in the related prior art, a Last Segment Flag (LSF) field of 1 bit is used to indicate whether or not the last byte of a segment corresponds to the last byte of a PDU.

In addition, another prior art discloses that the SO field is at least 14 bits or 1 5 bits long. Meanwhile, it further uses a Type field of 1 bit, to indicate whether a SO field exists in the corresponding header. The Type field can be called as SOI field.

Therefore, to indicate or describe an RLC PDU segment, the header of the segment must comprise extra fields, SOI (1 bit), SO (14 or 15 bits) and LSF (1 bit). Thus, a total of extra 16 to 1 7 bits at least are needed for a segment header. However, these fields cannot be used to reassemble the original RLC PDU unambiguously, especially when RLC PDU segments of the original RLC PDU are received out of sequence and interleaved with other RLC PDUs or segments of other RLC PDUs.

In short, the fields included in the header of the RLC PDU segment cannot be used to reassemble the original RLC PDU unambiguously, causing transmission delay or failure.

This in mind, the present invention aims at providing a method and apparatus for setting headers in a wireless communications system, for maintaining transmission efficiency and preventing transmission failure.

This is achieved by a method and apparatus for setting headers in a wireless communications system according to claims 1 and 5. The dependent claims pertain to corresponding further developments and improvements.

As will be seen more clearly from the detailed description following below, the claimed method for setting headers in a transmitter of a wireless communications system comprises dividing a Radio Link Control Protocol Data Unit into a plurality of segments each comprising a header, and setting the header to comprise a field indicating a sequence number of the Radio Link Control Protocol Data Unit.

In the following, the invention is further illustrated by way of example, taking reference to the accompanying drawings. Thereof
Fig. 1 is a schematic diagram of a wireless communications system.
Fig. 2 is a function block diagram of a wireless communications device.
Fig. 3 is a diagram of program code of Fig. 2.
Fig. 4 is a flowchart of a process according to an embodiment of the present invention.

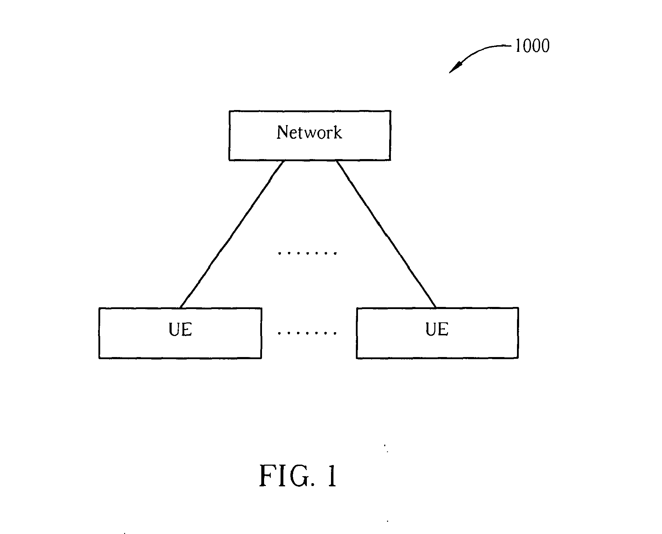

Please refer to Fig. 1, which illustrates a schematic diagram of a wireless communications system 1000. The wireless communications system 1000 can be a 3G mobile telecommunications system, an LTE (long-term evolution) system or other mobile communications systems, and is briefly composed of a network and a plurality of UEs. In Fig. 1, the network and the UEs are simply utilized for illustrating the structure of the wireless communications system 1000. Practically, the network may comprise a plurality of base stations (Node Bs), radio network controllers and so on according to actual demands, and the UEs can be devices such as mobile phones, computer systems, etc. Besides, the network and the UE can be seen as a transmitter or receiver according to transmission direction, e.g., for uplink, the UE is the transmitter and the network is the receiver, and for downlink, the network is the transmitter and the UE is the receiver.

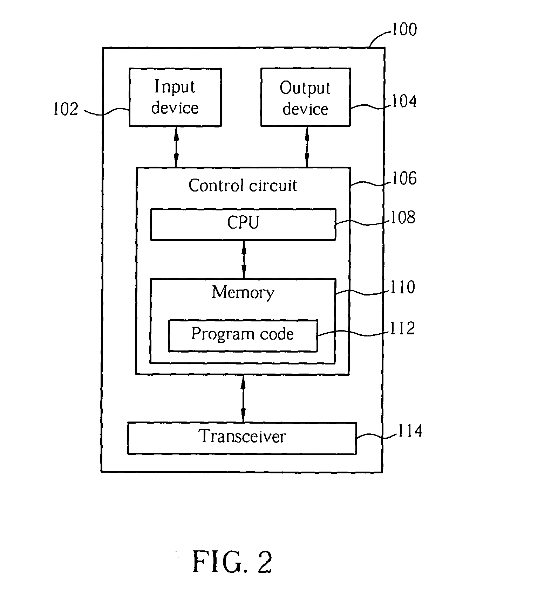

Please refer to Fig. 2, which is a functional block diagram of a communications device 100 in a wireless communications system. The wireless communications system is preferably the LTE system. For the sake of brevity, Fig. 2 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

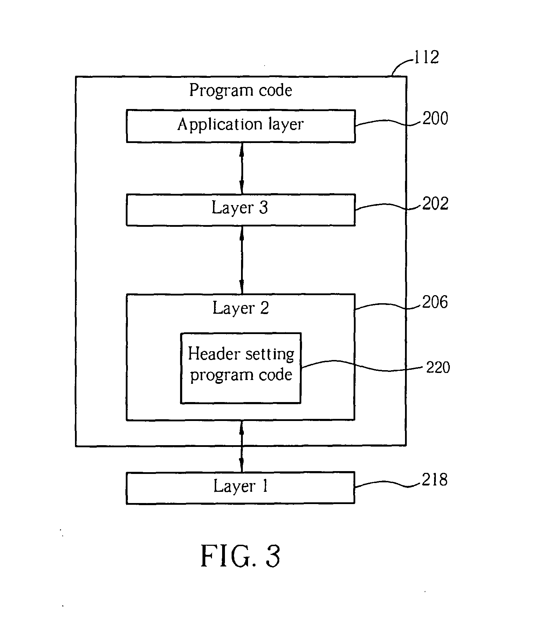

Please continue to refer to Fig. 3. Fig. 3 is a diagram of the program code 112 shown in Fig. 2. The program code 112 includes an application layer 200, a Layer 3 202, and a Layer 2 206, and is coupled to a Layer 1 218. The Layer 3 202 comprises a Radio Resource Control layer and a PDCP (Packet Data Convergence Protocol) layer, and performs resource control. Note that the PDCP layer can alternatively be considered to belong to Layer 2 206. Whether the PDCP layer belongs to the Layer 3 202 or the Layer 2 206 is not related to the present invention. The Layer 2 206 comprises an RLC layer and a MAC layer, and performs link control. The Layer 1 218 performs physical connections.

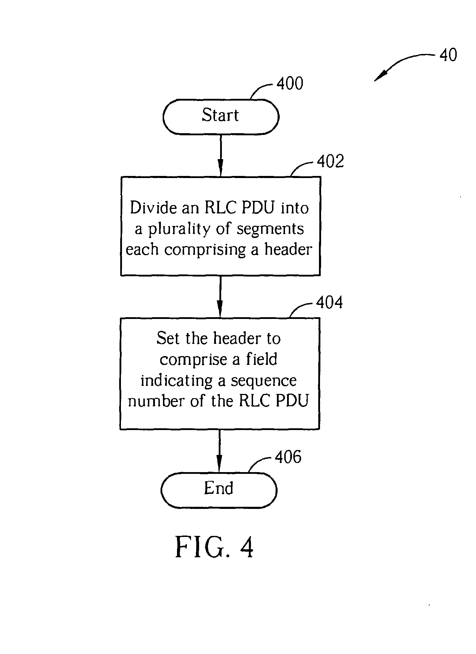

In the LTE system, the Layer 2 206 supports segmenting or re-segmenting of an RLC PDU due to radio condition change. In such a situation, the embodiment of the present invention provides a header setting program code 220 for accurately setting a header of an RLC PDU segment. Please refer to Fig. 4, which illustrates a schematic diagram of a process 40. The process 40 is utilized for setting a header in a transmitter of the wireless communications system 1000, and comprises the following steps:
Step 400: Start.
Step 402: Divide an RLC PDU into a plurality of segments each comprising a header.
Step 404: Set the header to comprise a field indicating a sequence number of the RLC PDU.
Step 406: End.

According to the process 40, after an RLC PDU is segmented into multiple segments, the embodiment of the present invention set a header of a segment to have a field indicating a sequence number of the RLC PDU. In other words, in the embodiment of the present invention, the header of the RLC PDU segment comprises a sequence number of the original RLC PDU. As a result, the receiver can reassemble the original RLC PDU unambiguously.

In the embodiment of the present invention, the sequence number of the RLC PDU can be an RLC sequence number or a sequence number used in an upper layer (PDCP layer). In such a situation, when RLC PDU segments of the RLC PDU are received out of sequence and/or interleaved with other RLC PDUs or segments of other RLC PDUs, the receiver can reassemble the RLC PDU according to the field set by the embodiment of the present, so as to maintain transmission efficiency and prevent transmission failure.

In summary, via the embodiment of the present invention, the header of the RLC PDU segment comprises a sequence number of the original RLC PDU, and can be used to reassemble the original RLC PDU, so as to maintain transmission efficiency and prevent transmission failure.

## Claims

1. A method for setting headers in a transmitter of a wireless communications system comprising:
dividing a Radio Link Control Protocol Data Unit into a plurality of segments each comprising a header (402);
**characterized by** setting the header to comprise a field indicating a first sequence number of the Radio Link Control Protocol Data Unit (404).

2. The method of claim 1, **characterized in that** the first sequence number is a Radio Link Control sequence number.

3. The method of claim 1, **characterized in that** the first sequence number is a second sequence number used in an upper layer of a Radio Link Control entity of the transmitter.

4. The method of claim 3, **characterized in that** the upper layer is a Packet Data Convergence Protocol layer.

5. A communications device (100) for accurately setting headers in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
dividing a Radio Link Control Protocol Data Unit into a plurality of segments each comprising a header (402);
**characterized by** setting the header to comprise a field indicating a first sequence number of the Radio Link Control Protocol Data Unit (404).

6. The communications device of claim 5, **characterized in that** the first sequence number is a Radio Link Control sequence number.

7. The communications device of claim 5, **characterized in that** the first sequence number is a second sequence number used in an upper layer of a Radio Link Control entity of the communications device.

8. The communications device of claim 7, **characterized in that** the upper layer is a Packet Data Convergence Protocol layer.
